# EUROPEAN PATENT SPECIFICATION

(11) **EP 2 712 753 B1**
(45) Date of publication and mention of the grant of the patent: **22.03.2017**
(21) Application number: 13182662.0
(22) Date of filing: 02.09.2013
(51) Int. Cl.: B60K 15/03, F15B 1/26

(54) **Fluid storage vessel**
Flüssigkeitsspeicherkessel
Récipient de stockage de fluide

(30) Priority: 26.09.2012 GB 201217195
(43) Date of publication of application: 02.04.2014
(73) Proprietor: Caterpillar Inc., Peoria, IL 61629 (US)
(72) Inventor: Buxton, Richard L, 38320 Herbeys (FR)
(74) Representative: BRP Renaud & Partner mbB Rechtsanwälte Patentanwälte Steuerberater

(56) References cited:
- DE-A1- 4 413 846
- JP-A- 2010 285 064
- US-A- 4 453 564
- US-A1- 2008 302 805

## Description

### Technical Field

The present disclosure relates to a fluid storage vessel and in particular a fluid storage vessel having a suction line through which fluid may be drawn from the vessel.

### Background

Fluid storage vessels are provided in many machines for storing fluid used during the operation of those machines. Such machines may include, for example, an engine, a pump, a vehicle, and so on. The fluid may take the form of a liquid or a gas and may be of a consumable nature such as fuel or a reusable nature such as lubricant, coolant or hydraulic fluid.

Fluid storage vessels of this nature may be made of metals or plastics materials. Plastics materials are particularly favorable since they can be easily moulded to form a vessel with a more complex shape in order to make use of all available space within the structure in which they are to be mounted, such as a vehicle frame. Fluid storage vessels may include a suction line extending into the interior of the vessel and through which fluid may be drawn. The suction line may include a rigid conduit having a first end disposed within the interior of the vessel proximal to a lower portion and a second end disposed on the exterior of the vessel proximal to an upper portion. The suction line is commonly made of a rigid material to ensure the first end remains proximal to the lowermost portion (usually the base) so as to be submersed in the fluid regardless of the fluid level.

Fluid storage vessels also include a filling port through which the fluid in the vessel may be replenished. The filling port may be opened and closed by a conventional cap.

Breather systems are provided on most fluid storage vessels to ensure the pressure within the vessels remains at an acceptable level. The breather system provides a flow path for air to exit the vessel when fluid is being replenished and for air to enter the vessel when fluid is being drawn. In the absence of a fully working breather to facilitate the flow of air into the vessel while fluid is being drawn, a vacuum would be created thus inhibiting further fluid being drawn or leading to deformation of the vessel. The breather system may be provided in the wall of the fluid storage vessel or in association with the filling port, such as in the cap.

The ability of the breather system to allow air to pass in and out of the vessel may reduce with age, particularly when used in dirty conditions as the debris in the ambient air may collect in its pores, which is known as plugging. The breather system should be cleaned or replaced when plugging occurs so as to restore the fluid storage vessel to its normal operating efficiency. However, sometimes plugging may go unnoticed for sometime and the size of the vacuum created inside the vessel may lead to deformation. Small vacuums may cause elastic deformation while large vacuums may lead to plastic deformation and thus irreparable damage to the vessel. However, even small amounts of deformation can damage the suction line as the inward deflection of the upper and lower portions of the vessel can bend the suction line and thus restrict the flow of fluid out of the vessel. US-B-4453564, which comprises the features mentioned in the preamble of claim 1, describes a fuel tank for a motor vehicle which has a fuel feed pipe for connecting the fuel supply system. The tank comprises upper and lower half shells which are welded together and provided with ribs which project into the tank to define an inner wall for providing strengthening.

It is an object of the present disclosure at least partially to address the shortcomings noted above in connection with existing fluid storage vessels.

### Summary of the Invention

According to the present disclosure, there is provided a fluid storage according to claim 1.

### Brief Description of the Drawings

By way of example only, one embodiment of the present disclosure will now be described in detail, with reference being made to the accompanying drawings, in which:
Figure 1 is a first perspective view of a fluid storage vessel according to the present disclosure;
Figure 2 is a second perspective view of the fluid storage vessel shown in Figure 1;

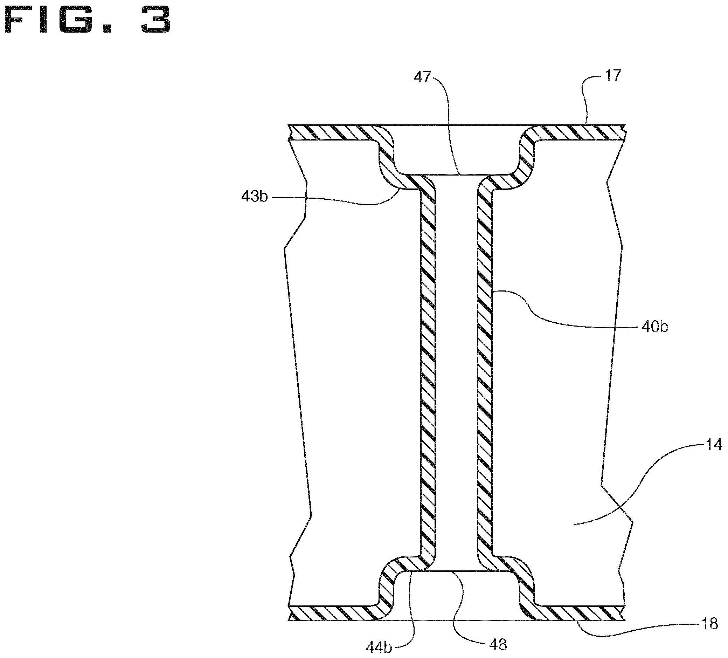

Figure 3 a cross-sectional view through the fluid storage vessel of the previous figures, along the lines A-A shown in Figure 1;
Figure 4 is a cross-sectional view through the fluid storage vessel shown in the previous figures, along the line B-B shown in Figure 1; the fluid storage vessel here being shown in a normal state; and
Figure 5 is a cross-sectional view through the fluid storage vessel shown in the previous figures and along the line B-B of Figure 1, the fluid storage vessel here being shown in a deformed state.

### Detailed Description

The following is a detailed description of an exemplary embodiment of the present disclosure. The exemplary embodiment described therein and illustrated in the drawings is intended to teach the principles of the present disclosure, enabling those of ordinary skill in the art to implement and use the present disclosure in many different environments and for many different applications. Therefore, the exemplary embodiment is not intended to be, and should not be considered as, a limiting description of the scope of patent protection. Rather, the scope of patent protection shall be defined by the appended claims.

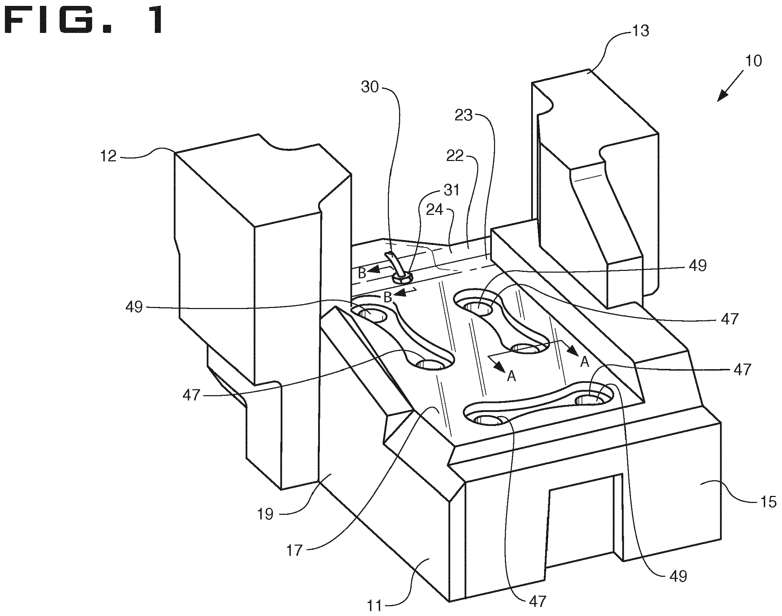

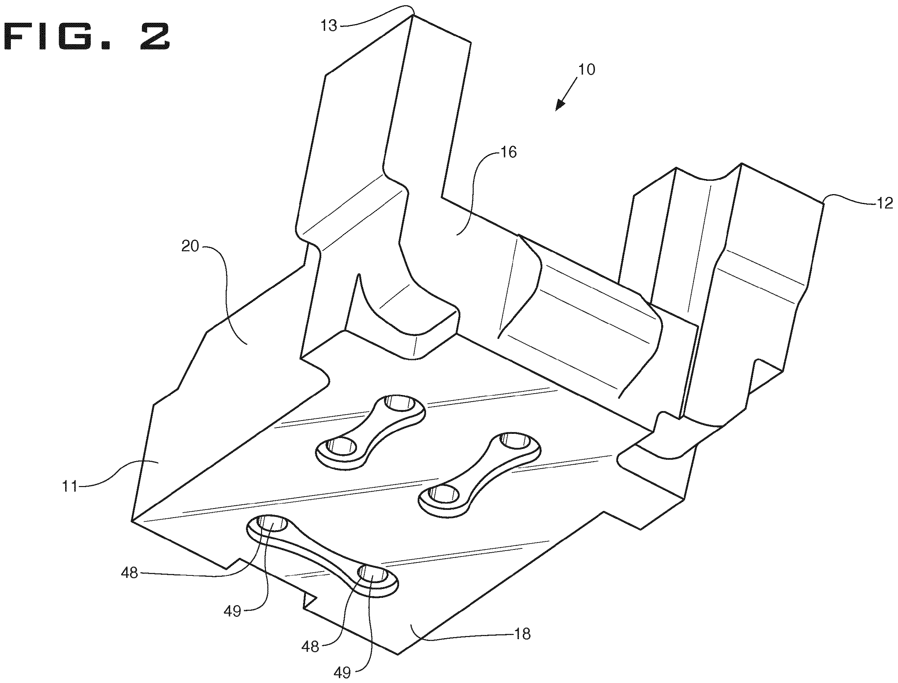

Referring initially to Figures 1 and 2, there is shown a fluid storage vessel generally indicated 10. The fluid storage vessel 10 may include a base portion 11 and first and second extension portions 12,13 upstanding from two corners of the base portion 11. The base portion 11 and the first and second extension portions 12,13 may together define an interior space 14 for carrying fluid.

The shape of the fluid storage vessel 10 may be selected according to its intended purpose. For example, the vessel 10 may comprise a fuel tank arranged for fluid communication with an engine (not shown) for installation on a vehicle (not shown). The fluid storage vessel 10 may be arranged for disposal within the chassis of the vehicle and may thus be shaped according to the space available within the chassis. The first and second extension portions 12,13 may be included to make use of the available space on the assembled vehicle. Alternatively or additionally, the first and second extension portions 12,13 may be furnished with a fluid fill port (not shown) and a breather system (not shown), which may be easily accessible on the assembled vehicle due to the height of the first and second extension portions. The fluid storage vessel 10 may be used to carry other fluids and may be configured to connect to other machines (not shown) and adapted to fit within differently shaped spaces within the chassis.

The base portion 11 may be generally rectangular and may include a front wall 15, a rear wall 16, an upper wall 17, a lower wall 18, and first and second side walls 19,20. The first and second extension portions 12,13 may be located alongside the first and second side walls 19,20, respectively and adjacent the rear wall 16. It will be apparent to the skilled addressee that the number and location of the first and second extension portions 12,13 may vary according to the space available within the chassis or other machine constraints.

The upper and lower walls 17,18 may be substantially planar and may have interior surfaces 17a,18a and exterior surfaces 17b,18b which may be arranged substantially parallel to one another. The walls of the fluid storage vessel are generally formed of a single layer and each may for the most part have a substantially uniform thickness. The upper wall 17 may be provided with a channel 22 arranged to extend between the first and second side walls 19,20. The channel 22 may have a front face 23 arranged at an angle to the upper and or lower walls 17,18 and may also have a rear face 24 arranged at an angle to the front face 23. The front and rear faces 23,24 may be arranged such that the channel 22 is substantially V-shaped.

The fluid storage vessel 10 may also be furnished with a suction line 30 for drawing fluid from the interior space 14. The suction line 30 may comprise a rigid conduit arranged to extend through an opening (not shown) formed in a wall 17 of the fluid storage vessel 10. In the present embodiment, the opening is formed in the front face 23 of the channel 22. The fluid storage vessel 10 may also include a connector 31 to hold the suction line 30 in position and to provide a seal between the suction line 30 and the fluid storage vessel 10 to restrict leakage. The connector 31 may comprise an abutment portion 32 for engagement with the exterior surface 17b of the fluid storage vessel 10, a hole (not shown) through the abutment portion 32 and an annular wall 33 projecting from the abutment portion 32 so as to encircle the hole. The hole is sized and shaped to receive the suction line 30 in a secure and sealed manner so as to prevent relative movement between the suction line 30 and the upper wall 17 and to prevent the escape of fluid. Adhesive may be applied to aid with the securing and sealing of the suction line 30 within the hole. The annular wall 33 may be provided with an external thread (not shown) for engagement with an internal thread (not shown) formed in the opening. The inter-engagement of the threads draw the abutment portion onto the exterior surface of the upper wall and thus provide a good seal between the connector and the fluid storage vessel 10.

The suction line 30 may have an internal end 35 disposed inside the fluid storage vessel 10 and may have an external end 36 disposed outside the fluid storage vessel, the internal end 35 defining a fluid inlet 35a and the external end defining a fluid outlet 36a. The internal end 35 may be spaced slightly above and may extend at an angle to the interior surface 18a of the lower wall 18.

The fluid storage vessel 10 may also include one or more strengthening members, such as struts 40, extending between the upper and lower walls 17,18. The struts 40 are located inside the fluid storage vessel 10 and are arranged to resist deformation of the upper and lower walls 17,18 in the vicinity thereof. Their primary function is to resist inward deflection of the upper and lower walls 17,18 which might result from a vacuum in the fluid storage vessel, caused possibly by a plugged breather. However, the struts 40 may also serve to resist outward deflection and subsequent splitting caused by a pressure rise in the fluid storage vessel 10, which might also result from a plugged breather. In the present embodiment the struts 40 are forward of the suction line 30 so as to define a reinforced region and a non-reinforced region. The quantity, size, shape and spatial relationship of the struts 40 may vary according to the size and shape of the fluid storage vessel 10 and its method of manufacture.

The fluid storage vessel 10 may include multiple sets of struts 40 and each of those sets may have discreet means by which its struts 40 attach to the upper and lower walls 17,18. For instance, those discreet means may comprise upper and lower platforms 43,44 projecting into the interior space 14 from the interior faces 17a,18a of the upper and lower walls 17,18, the number of platforms 43,44 on each of the upper and lower walls 17,18 may correspond to the number of sets of struts. In the present embodiment the fluid storage vessel 10 includes three sets of struts 40 so the upper wall 17 includes three platforms 43 and the lower wall 18 includes three lower platforms 44. The struts 40 in each group may be substantially parallel to each other and normal to the upper and lower walls 17,18 so the upper and lower platforms 43,44 for each group may therefore be arranged opposite one another.

The fluid storage vessel 10 of the present embodiment may be molded or cast and may be provided with multiple recesses 45 in the exterior faces 17b,18b of the upper and lower walls 17,18. Each recess 45 in the exterior faces 17b,18b may result in a projection on the interior face 17a,18a so as to define the platform 43,44.

In the present arrangement, there is provided one front set of struts 40a and two rear sets of struts 40b,40c. The front set of struts 40a includes two struts spaced laterally apart on a front notional line (not shown) extending between the first and second side walls 19,20. The upper and lower walls 17,18 include upper and lower front platforms 43a,44a arranged to face one another and to extend partway between the first and second side walls 19,20.

The first and second rear sets of struts 40b,40c may each include two struts which may be spaced laterally apart on rear notional lines (not shown) extending between the front and rear walls 15,16. The rear notional lines may be substantially parallel to one another such that the first set of struts 40b is proximal to the first side wall 19 and the second set of struts 40c is proximal to the second side wall 20. More specifically, the first and second rear sets of struts 40b,40c may be spaced the same distance from the first and second side walls 19,20, respectively. A lower portion of the internal end 35 of the suction line 30 may extend partway between the first and second rear sets of struts 40b,40c.

The struts 40 may be substantially solid or tubular or a mixture of the two. In the present embodiment the struts 40 are cylindrical and tubular, and each has opposed upper and lower ends attached to upper and lower platforms 43,44. Each strut 40 has a hollow interior which, in combination with upper and lower openings 47,48 formed in its respective upper and lower platforms 43,44, defines a through hole 49 extending through the fluid storage vessel 10.

### Industrial Applicability

The fluid storage vessel 10 as described above is very likely produced from a moulding, or possibly a casting, process. The apparatus (not shown) for the chosen process would possibly include outer moulds to create the fluid storage vessel 10 and inner cores to create the interior spaces 14 and the through holes 49. The moulds would be sized and shaped according to the desired size and shape of the resulting fluid storage vessel, which would probably be determined by the space available in the machine in which it is to be mounted.

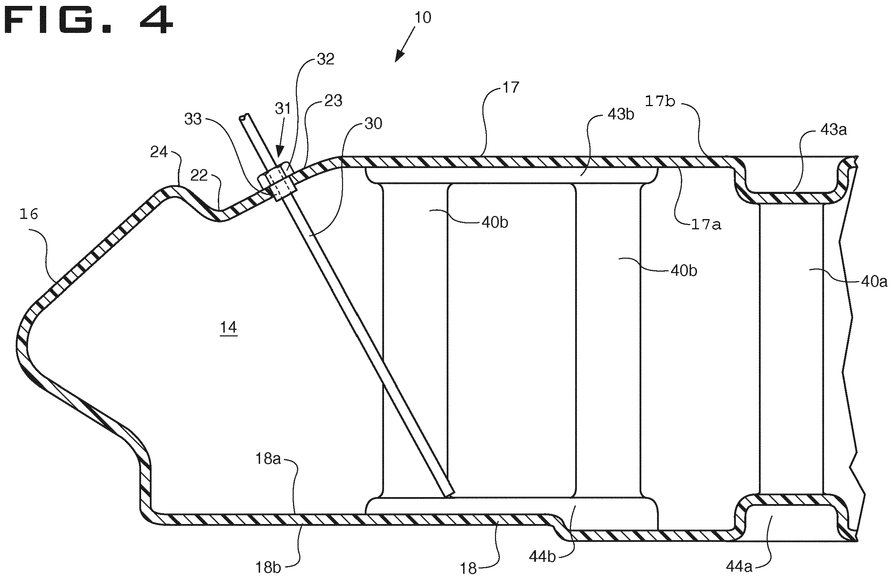

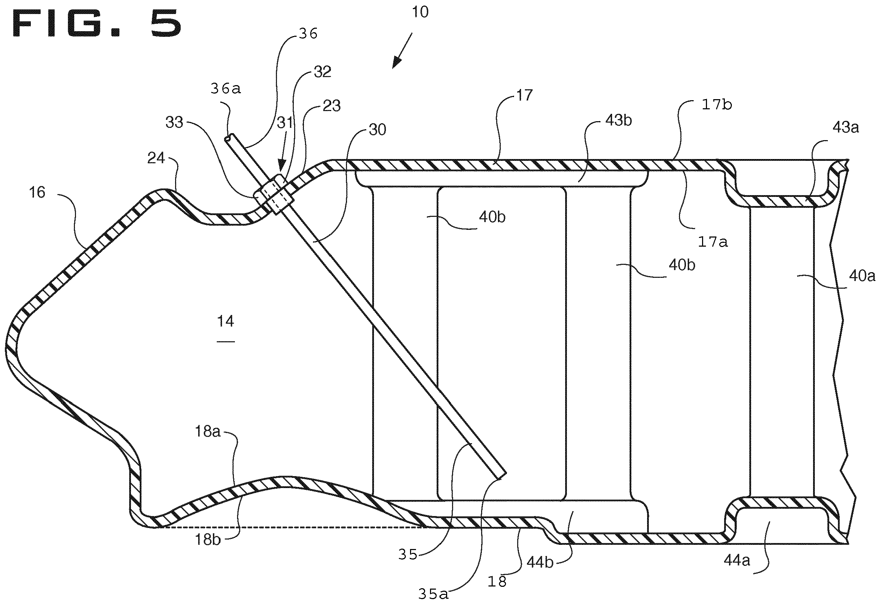

In use, fluid is drawn from the tank via the suction line 30 which may be associated with a lift pump (not shown) or the like. Generally, the breather will be operating effectively, which will allow air to pass into interior space 14 of the fluid storage vessel 10 as the fluid level drops and the pressure in said fluid storage vessel 10 is equalized. However, in the event that the breather is plugged and no air is able to enter the interior space 14, a vacuum will be created within the fluid storage vessel 10 due to the internal and external pressure difference. As the pressure difference increases due to the lift pump's ability to continue to draw fuel, the fluid storage vessel 10 will eventually start to deform. The compressive strength of the struts 40 will resist deformation of the upper and lower walls 17,18 in the reinforcement area of the fluid storage vessel 10. However, deformation will likely occur in the non-reinforcement area as there is nothing or little to resist the inward deflection of the upper and lower walls 17,18 in that area. Such is the nature of the fluid storage vessel in the non-reinforcement area that most of the deflection may occur in the upper and lower walls 17,18, and possibly in the vicinity of the channel 22. Figures 4 and 5 show the vessel before and after deformation and from which it is clear that the upper and lower walls 17,18 are designed to deform in a controlled manner. That is to say that the channel 22 is drawn inward and forward which causes the angle of the front face 23 to reduce relative to the upper wall 17. As the angle of the front face 23 changes, the suction line 30 pivots approximately about the connector 31 such that its lower portion moves forward and away from the inner face 18a of the lower wall 18.

## Claims

1. A fluid storage vessel (10) comprising:
upper and lower walls (17,18) at least partially defining an interior space (14) for carrying fluid;
at least one strengthening member (40) extending between the upper and lower walls (17,18) defining a reinforced region; and
a suction line (30) extending into the interior space (14) and having a lower section (35) defining an inlet configured to draw fluid,
**characterised in that** the lower section (35) is arranged at an angle relative to a portion of the lower wall (18) proximal to the lower section;
the upper wall (17) comprises a substantially v-shaped channel (22) extending between first and second side walls (19,20) of the fluid storage vessel, the channel (22) comprising a front face (23), arranged at an angle to the upper and/or lower walls (17,18), and a rear face (24) arranged at an angle to the front face (23),the front face (23) being located in a non-reinforced region; and
the suction line (30) extends through an opening in the front face (23) into the interior space (14);
wherein a decrease in pressure within the fluid storage vessel (10) causes the deformation in the upper and lower walls (17,18) in the non-reinforced region changing the angle of the front face (23) and moving the suction line (30) away from the lower wall (18).

2. A fluid storage vessel (10) as claimed in claim 1 or claim 2, wherein the lower section (35) is generally rectilinear.

3. A fluid storage vessel (10) as claimed in claim 4, wherein the suction line (30) extends generally perpendicular to the front face (23).

4. A fluid storage vessel (10) as claimed in any preceding claim, wherein the suction line (30) is a substantially rigid conduit through which fluid may be transmitted.

5. A fluid storage vessel (10) as claimed in any preceding claim, wherein the at least one strengthening member (40,43,44) is integral to the upper and lower walls (17,18) of the fluid storage vessel (10).

6. A fluid storage vessel (10) as claimed in claim 5, wherein the at least one strengthening member (40,43,44) is generally tubular so as to define a hollow interior and the upper and lower walls (17,18) each include at least one hole arranged coaxially with the hollow interior.

7. A fluid storage vessel (10) as claimed in any preceding claim, and further comprising front and rear opposed end walls (15,16) extending between the upper and lower walls (17,18), the at least one strengthening member (40,43,44) being located towards the front end wall (15) and the suction line (30) being located towards the rear end wall (16).

8. A fluid storage vessel (10) as claimed in any preceding claim, and further comprising first and second side walls (19,10) and first and second strengthening members (40,43,44) disposed proximal to the first and second side walls (19,20) respectively, the lower portion (35) of the suction line (30) being disposed at least partway between those first and second strengthening members (40,43,44).

9. A fluid storage vessel (10) as claimed in claim 8, wherein:
the first strengthening member (40,43,44) comprises first upper and lower platforms (43,44) projecting into the interior space (14) from the upper and lower walls (17,18) and a plurality of first struts (40) extending between the first upper and lower platforms (43,44); and
the second strengthening member (40,43,44) comprises second upper and lower platforms (43,44) projecting into the interior space (14) from the upper and lower walls (17,18) and a plurality of second struts (40) extending between the second upper and lower platforms (43,44).

10. A fluid storage vessel (10) as claimed in claim 9, wherein the struts (40) in each of the first and second strengthening members (40,43,44) are arranged substantially in a line so as to form two substantially parallel rows of first and second struts (40).

11. A fluid storage vessel (10) as claimed in claims 7 and 8, wherein a third strengthening member (40,43,44) is disposed between the front end wall (15) and the first and second strengthening members (40,43,44).

12. A fluid storage vessel (10) as claimed in claim 11 wherein the third strengthening member (40,43,44) comprises a plurality of struts arranged substantially in a row running normal to the rows of first and second struts (40).

## Patentansprüche

1. Flüssigkeitsspeicherbehälter (10), umfassend:
eine obere und eine untere Wand (17, 18), die zumindest teilweise einen Innenraum (14) zum Tragen von Flüssigkeit definieren;
zumindest ein Verstärkungselement (40), das sich zwischen der oberen und der unteren Wand (17, 18) erstreckt und einen verstärkten Bereich bildet; und
eine Saugleitung (30), die sich in den Innenraum (14) erstreckt und einen unteren Bereich (35) aufweist, der einen Einlass, ausgebildet zum Ansaugen von Flüssigkeit, definiert,
**dadurch gekennzeichnet, dass** der untere Bereich (35) in einem Winkel bezüglich zu einem Abschnitt der unteren Wand (18), nächstgelegen zu dem unteren Bereich, angeordnet ist;
die obere Wand (17) einen im Wesentlichen v-förmigen Kanal (22) umfasst, der sich zwischen einer ersten und einer zweiten Seitenwand (19, 20) des Flüssigkeitsspeicherbehälters erstreckt, der Kanal (22) umfassend eine Vorderseite (23), angeordnet in einem Winkel zu der oberen und/oder unteren Wand (17, 18), und eine Rückseite (24), angeordnet in einem Winkel zu der Vorderseite (23), wobei die Frontseite (23) in einem nicht verstärkten Bereich angeordnet ist; und
die Saugleitung (30) sich durch eine Öffnung in der Vorderseite (23) in den Innenraum (14) erstreckt;
wobei ein Druckabfall in dem Flüssigkeitsspeicherbehälter (10) die Verformung in der oberen und der unteren Wand (17, 18) in dem nicht verstärkten Bereich bewirkt, was den Winkel der Vorderseite (23) verändert, und die Saugleitung (30) von der unteren Wand (18) wegbewegt.

2. Flüssigkeitsspeicherbehälter (10) nach Anspruch 1 oder Anspruch 2, wobei der untere Bereich (35) im Allgemeinen geradlinig ist.

3. Flüssigkeitsspeicherbehälter (10) nach Anspruch 4, wobei die Saugleitung (30) sich im Allgemeinen senkrecht zu der Vorderseite (23) erstreckt.

4. Flüssigkeitsspeicherbehälter (10) nach einem der vorhergehenden Ansprüche, wobei die Saugleitung (30) eine im Wesentlichen starre Leitung ist, durch die Flüssigkeit übertragen werden kann.

5. Flüssigkeitsspeicherbehälter (10) nach einem der vorhergehenden Ansprüche, wobei das zumindest eine Verstärkungselement (40, 43, 44) integral mit der oberen und der untern Wand (17, 18) des Flüssigkeitsspeicherbehälters (10) ist.

6. Flüssigkeitsspeicherbehälter (10) nach Anspruch 5, wobei das zumindest eine Verstärkungselement (40, 43, 44) im Allgemeinen rohrförmig ist, um einen hohlen Innenraum zu definieren, und die obere und die untere Wand (17, 18) jeweils zumindest ein Loch aufweisen, das koaxial mit dem hohlen Innenraum angeordnet ist.

7. Flüssigkeitsspeicherbehälter (10) nach einem der vorhergehenden Ansprüche, und weiterhin umfassend eine vordere und eine hintere gegenüberliegende Stirnwand (15, 16), die sich zwischen der oberen und der unteren Wand (17, 18) erstrecken, wobei das zumindest eine Verstärkungselement (40, 43, 44) in Richtung der vorderen Stirnwand (15) angeordnet ist und die Saugleitung (30) in Richtung der hinteren Stirnwand (16) angeordnet ist.

8. Flüssigkeitsspeicherbehälter (10) nach einem der vorhergehenden Ansprüche, und weiterhin umfassend eine erste und eine zweite Seitenwand (19, 10) und ein erstes und ein zweites Verstärkungselement (40, 43, 44), angeordnet proximal zu der ersten bzw. der zweiten Seitenwand (19, 20), wobei der untere Bereich (35) der Saugleitung (30) zumindest teilweise zwischen diesem ersten und zweiten Verstärkungselement (40, 43, 44) angeordnet ist.

9. Flüssigkeitsspeicherbehälter (10) nach Anspruch 8, wobei:
das erste Verstärkungselement (40, 43, 44) eine erste obere und untere Plattform (43, 44), die in den Innenraum (14) von der oberen und der unteren Wand (17, 18) hineinragen, und eine Vielzahl von ersten Streben (40), die sich zwischen der ersten oberen und unteren Plattform (43, 44) erstrecken, umfasst; und
das zweite Verstärkungselement (40, 43, 44) eine zweite obere und untere Plattform (43, 44), die in den Innenraum (14) von der oberen und der unteren Wand (17, 18) hineinragen, und eine Vielzahl von zweiten Streben (40), die sich zwischen der zweiten oberen und unteren Plattform (43, 44) erstrecken, umfasst.

10. Flüssigkeitsspeicherbehälter (10) nach Anspruch 9, wobei die Streben (40) in jedem von dem ersten und dem zweiten Verstärkungselement (40, 43, 44) im Wesentlichen in einer Linie angeordnet sind, um zwei im Wesentlichen parallele Reihen von ersten und zweiten Streben (40) zu bilden.

11. Flüssigkeitsspeicherbehälter (10) nach Ansprüchen 7 und 8, wobei ein drittes Verstärkungselement (40, 43, 44) zwischen der vorderen Stirnwand (15) und dem ersten und dem zweiten Verstärkungselement (40, 43, 44) angeordnet ist.

12. Flüssigkeitsspeicherbehälter (10) nach Anspruch 11, wobei das dritte Verstärkungselement (40, 43, 44) eine Vielzahl von ersten Streben umfasst, die im Wesentlichen in einer Reihe angeordnet sind, die normal zu den Reihen der ersten und zweiten Streben (40) verläuft.

## Revendications

1. Récipient de stockage de fluide (10) comprenant :
des parois supérieure et inférieure (17, 18) définissant au moins partiellement un espace intérieur (14) pour transporter du fluide ;
au moins un élément de raidissement (40) s'étendant entre les parois supérieure et inférieure (17,18) définissant une région renforcée ; et
une conduite d'aspiration (30) s'étendant dans l'espace intérieur (14) et ayant une section inférieure (35) définissant une entrée configurée pour tirer du fluide,
**caractérisé en ce que** la section inférieure (35) est agencée à un certain angle par rapport à une partie de la paroi inférieure (18) proximale par rapport à la section inférieure ;
la paroi supérieure (17) comprend un canal sensiblement en forme de V (22) s'étendant entre des première et seconde parois latérales (19, 20) du récipient de stockage de fluide, le canal (22) comprenant une face avant (23), agencée à un certain angle par rapport aux parois supérieure et/ou inférieure (17, 18), et une face arrière (24) agencée à un certain angle par rapport à la face avant (23), la face avant (23) étant située dans une région non renforcée ; et
la conduite d'aspiration (30) s'étend à travers une ouverture dans la face avant (23) dans l'espace intérieur (14) ;
dans lequel une diminution de pression à l'intérieur du récipient de stockage de fluide (10) provoque la déformation des parois supérieure et inférieure (17, 18) dans la région non renforcée changeant l'angle de la face avant (23) et déplaçant la conduite d'aspiration (30) à l'écart de la paroi inférieure (18).

2. Récipient de stockage de fluide (10) selon la revendication 1 ou la revendication 2, dans lequel la section inférieure (35) est globalement rectiligne.

3. Récipient de stockage de fluide (10) selon la revendication 4, dans lequel la conduite d'aspiration (30) s'étend globalement perpendiculairement à la face avant (23).

4. Récipient de stockage de fluide (10) selon n'importe quelle revendication précédente, dans lequel la conduite d'aspiration (30) est un conduit sensiblement rigide à travers lequel du fluide peut être transmis.

5. Récipient de stockage de fluide (10) selon n'importe quelle revendication précédente, dans lequel l'au moins un élément de raidissement (40, 43, 44) est d'un seul tenant avec les parois supérieure et inférieure (17, 18) du récipient de stockage de fluide (10).

6. Récipient de stockage de fluide (10) selon la revendication 5, dans lequel l'au moins un élément de raidissement (40, 43, 44) est globalement tubulaire de façon à définir un intérieur creux et les parois supérieure et inférieure (17, 18) incluent chacune au moins un trou agencé de façon coaxiale avec l'intérieur creux.

7. Récipient de stockage de fluide (10) selon n'importe quelle revendication précédente, et comprenant en outre des parois d'extrémité opposées avant et arrière (15, 16) s'étendant entre les parois supérieure et inférieure (17, 18), l'au moins un élément de raidissement (40, 43, 44) étant situé vers la paroi d'extrémité avant (15) et la conduite d'aspiration (30) étant située vers la paroi d'extrémité arrière (16).

8. Récipient de stockage de fluide (10) selon n'importe quelle revendication précédente et comprenant en outre des première et seconde parois latérales (19, 10) et des premier et deuxième éléments de raidissement (40, 43, 44) disposés respectivement de façon proximale par rapport aux première et seconde parois latérales (19, 20), la partie inférieure (35) de la conduite d'aspiration (30) étant disposée au moins partiellement entre ces premier et deuxième éléments de raidissement (40, 43, 44).

9. Récipient de stockage de fluide (10) selon la revendication 8, dans lequel :
le premier élément de raidissement (40, 43, 44) comprend des premières plates-formes supérieure et inférieure (43, 44) en saillie dans l'espace intérieur (14) à partir des parois supérieure et inférieure (17, 18) et une pluralité de premiers contreventements (40) s'étendant entre les premières plates-formes supérieure et inférieure (43, 44) ; et
le deuxième élément de raidissement (40, 43, 44) comprend des secondes plates-formes supérieure et inférieure (43, 44) en saillie dans l'espace intérieur (14) à partir des parois supérieure et inférieure (17, 18) et une pluralité de seconds contreventements (40) s'étendant entre les secondes plates-formes supérieure et inférieure (43, 44).

10. Récipient de stockage de fluide (10) selon la revendication 9, dans lequel les contreventements (40) dans chacun des premier et deuxième éléments de raidissement (40, 43, 44) sont agencés sensiblement en une ligne afin de former deux rangées sensiblement parallèles de premier et second contreventements (40).

11. Récipient de stockage de fluide (10) selon les revendications 7 et 8, dans lequel un troisième élément de raidissement (40, 43, 44) est disposé entre la paroi d'extrémité avant (15) et les premier et deuxième éléments de raidissement (40, 43, 44).

12. Récipient de stockage de fluide (10) selon la revendication 11, dans lequel le troisième élément de raidissement (40, 43, 44) comprend une pluralité de contreventements agencés sensiblement dans une rangée courant perpendiculairement aux rangées des premier et second contreventements (40).
